**Europäisches Patentamt**

**European Patent Office**

**Office européen des brevets**

(19)

(11) **EP 0 702 320 A1**

(12) **EUROPEAN PATENT APPLICATION**

(43) Date of publication:
20.03.1996 Bulletin 1996/12

(51) Int. Cl.$^6$: **G06K 9/32**

(21) Application number: 94306760.3

(22) Date of filing: 15.09.1994

(84) Designated Contracting States:
**DE FR GB**

(71) Applicant: **HEWLETT-PACKARD COMPANY**
**Palo Alto, California 94304-1181 (US)**

(72) Inventor: **Bauer, Peter**
**Westbury Park, Bristol BS6 7NJ (GB)**

(74) Representative: **Webster, Denise Mary et al**
**Hewlett-Packard Ltd,**
**IP Section,**
**Building 2,**
**Filton Road,**
**Stoke Gifford**
**Bristol BS12 6QZ (GB)**

(54) **Skew detection**

(57)     The present invention relates to the detection of the angle of skew of a document.

The invention involves an optimised method for applying the Hough Transform so as to increase the processing speed and to reduce the amount of computer memory required.

The optimisation entails performing the processing steps on each of the selected image points for each value of a line slope parameter and calculating and storing a single value representative of the results of each cycle prior to performing the processing steps for the next value of the line slope parameter.

In this way, the need for a two-dimensional array in which to store the histogram values is avoided and processing speed is increased.

FIGURE 5

## Description

### Technical Field

The present invention relates to the field of document scanning and relates particularly to the detection of the angle of skew of a document.

### Background Art

Over the past few years low cost scanners have become available and are moving into general office use. Scanners are being used by office workers for electronic storage of routine office documents.

Low cost flat-bed and hand-held scanners will rarely scan along the page perfectly, therefore the first stage of document processing needs to be a deskewing phase to improve the quality of a scanned document image. This is because subsequent processing stages need correctly oriented images for their correct operation. Furthermore, some compression techniques degrade in the presence of severe skew and OCR techniques do not perform well.

There are several techniques available for rotating images, all with their strengths and weaknesses, but they all need a rotation angle made available to them. It is the accurate and efficient measurement of the skew angle that is addressed by the present invention.

A traditional core technique for skew detection is the Hough Transform, a technique which will be described in detail. For this technique to work effectively on the problem of skew detection, there are three distinct aspects that must be addressed.

Firstly, to detect skew, one must select features in the image that reflect the skew - these will normally be text lines.

Secondly, having selected suitable features, one must efficiently implement a variation of the Hough Transform that exposes only the skew angle and ignores or suppresses all the other complex features that are present in the full transform.

Finally, a robust and efficient way of interpreting the output of the previous technique as a single number must be devised.

### Disclosure of Invention

According to the present invention we provide a method of detecting the angle of skew of a page relative to a reference orientation comprising the following steps:

scanning the page;

selecting points of the electronic image representative of the angle of skew;

mapping the selected points into parameter space using a Hough Transform which utilises an equation for a line including a parameter indicative of the angle of slope of a line ('line slope parameter') and a second parameter so as to build up a histogram in parameter space;

analysing the results of the mapping to determine the presence of histogram peaks which indicate the skew angle, characterised by:

for values of the line slope parameter:

cycling through the preselected image points and calculating the value of the second parameter for the preselected image points and updating the histogram in parameter space;

statistically analysing the results of each such cycle and calculating and storing a value representative of the results of each cycle for use in the subsequent histogram peak analysis.

The invention provides an efficient and elegant technique for accurate and efficient calculation of the skew angle. The technique appears to be robust over a broad range of documents and can also recognise when it is unable reliably to detect the skew angle.

The method of the invention has the advantage that it obviates the need to store a two-dimensional histogram thereby significantly reducing the memory required.

Preferably the statistical analysis involves calculating the standard deviation in the Hough Transform histogram for each value of the line slope parameter. The use of standard deviation yields far superior results than using a simple global threshold. Preferably, the method comprises calculating a moving average of the standard deviation values and using the moving average to detect histogram peaks. This feature facilitates the identification and classification of histogram peaks.

In the method to be described, the selected points of the electronic image representative of the angle of skew are the centres of the minimum bounding boxes of characters.

The line equation used in the particular embodiment to be described is

$$\rho = x \cos\theta + y \sin\theta.$$

Preferably the method further comprises swapping the co-ordinates of the selected image points and utilising the resulting co-ordinates to determine the angle of skew. This technique facilitates detection of documents which are in landscape orientation, as will be described.

## Brief Description of Drawings

The prior art and an embodiment of the present invention will now be described, by way of example, with reference to the accompanying drawings in which:

Figure A illustrates the meaning of the parameters $\rho,\theta$ in the normal representation of a line;

Figures B, C D and E illustrate the mapping between image space and parameter space;

Figure F is a flow diagram of a known method of applying the Hough Transform;

Figures 1a, 1b and 1c illustrate the different types of pixel neighbour definitions;

Figures 2a, 2b and 2c illustrate a connected component example;

Figure 3 illustrates the status of scanlines during scanning;

Figures 4a, 4b and 4c illustrate the effect of connected component analysis;

Figure 5 is a flow diagram of the application of the Hough Transform in accordance with the present invention;

Figure 6 illustrates the sliding window used to calculate the moving average of a standard deviation curve;

Figures 7 and 8 illustrate two examples of the effect of the moving average approach;

Figure 9 illustrates aspects of peak classification;

Figure 10 illustrates a standard deviation curve for a landscape page;

Figures 11a and 11b illustrate the effect of swapping the coordinates of the image.

## Overview of Hough Transform

The Hough Transform, first developed over thirty years ago, relates to the recognition of complex patterns and more specifically to machine recognition of complex lines in photographs or other pictorial representations. In general, the viewed representation is divided into sufficiently small sectors or framelets that the complex pattern is divided into substantially straight line segments. Each of the segments is detected and transformed into slope and intercept data which may be stored and later analysed for the presence of desired patterns.

One way of implementing this transform is the slope intercept implementation. The key ideas of the method can be illustrated by considering identifying sets of collinear points in an image. A set of image points $(x,y)$ which lie on a straight line can be defined by a relation, f, such that

$$f((m, c),(x, y)) = y - mx - c = 0 \; ; \qquad \text{Equation 1}$$

where $m$ and $c$ are two parameters, the slope and intercept, which characterise the line.

Equation 1 maps each value of the parameter combination $(m,c)$ to a set of image points. The mapping is one-to-many from the space of possible parameter values $(m,c)$ to the space of image points. The Hough Transform uses the idea that Equation 1 can be viewed as a mutual constraint between image points and parameter points and therefore it can be interpreted as defining a one-to-many mapping from an image point to a set of possible parameter values. This corresponds to calculating the parameters of all straight lines which belong to the set that pass through a given image point $(x,y)$. This operation is known as 'backprojection' of the image point. In the case of a straight line, each image point backprojects a straight line in $(m,c)$ parameter space.

A problem with the $m,c$ parameterisation of lines is its inability to cope with vertical lines ie. $m \rightarrow \infty$. This problem is overcome by using the normal representation of a line:

$$\rho = x\, cos\theta + y\, sin\theta; \qquad\qquad\qquad \text{Equation 2}$$

The meaning of the parameters $\rho, \theta$ in Equation 2 in relation to a line $\lambda$ is shown in Figure A. The range of $\theta$ is 0 - 180° measured with respect to the $x$ axis. A horizontal line has $\theta = 90°$, with $\rho$ equal to the positive $y$ intercept. A vertical line has $\theta = 0°$, with $\rho$ equal to the positive $x$ intercept.

The mapping between the image space and the parameter space is one-to-many in either direction. Among the various properties that hold true for this transformation are:

i) a point in the document image corresponds to a sinusoidal curve in the parameter space;

ii) a point in the parameter space corresponds to a straight line in the document image;

iii) points lying in the same straight line in the document image correspond to curves through a common point in the parameter space;

iv) points lying on the same curve in the parameter space correspond to lines through the same point in the document.

These properties are illustrated in Figures B, C, D and E. Figure B shows points on a straight line in image space which map to several curves through a common point in parameter space as shown in Figure C. Thus many points in the same straight line in the document image correspond to curves through one common point in the parameter space.

Figure D shows many points on the same curve in parameter space which map to many lines through a single point in image space as shown in Figure E.

Known Application of Hough Transform

In order to detect the angle of skew of a document it is necessary to identify lines in the document. Text can be treated as thick textured lines which can have the Hough Transform applied to them. There are several possible approaches to extracting the information necessary to define a line and a particular approach will be described later in connection with the present invention.

It is known to apply the Hough Transform to the problem of detecting the angle of skew of a document in the manner illustrated in the flow diagram of Figure F. Figure F represents the following steps:

step 10 is extracting the points (IP) in the document image which are to be used to represent the lines of text;

step 12 is to clear a two-dimensional parameter space accumulator ie a two-dimensional data structure for storing the values in parameter space;

steps 14-17 form a loop as follows:
for each x,y co-ordinate pair of selected points perform a loop over the range of $\theta$ calculating the corresponding values of $\rho$ and increment the relevant histogram bin ($\theta$, $\rho$) in the two-dimensional array;

step 20 is to perform histogram analysis to detect peaks indicative of the skew angle. This may be done in several ways. One approach is to calculate the values representing a statistical analysis of the values in each $\theta$ column of the two-dimensional array and to store these in the one-dimensional array and to analyse the one-dimensional array and extract the document skew angle.

A disadvantage of this known approach is that it is computationally inefficient and requires a relatively large amount of storage space.

**Best Mode for Carrying Out the Invention & Industrial Applicability**

Before the application of the Hough Transform to a document image, it is necessary to extract information representing the lines of text. There are several known methods which could be used for this purpose and a preferred method will now be described.

Connected Components Analysis

In this embodiment, points at the middle of each character are used to define the line of text. A connected components analysis is used to identify the characters. This has important advantages.

Generally, graphics consist of relatively large and irregularly sized connected components whereas text consists of connected components of relatively small and regular size. By analysing the connected components, graphics and text in document images can be identified, grouped together in blocks and separated from each other. Another advantage is that noise in an image consists mostly of connected components of much smaller size than the average size of characters so it is easy to discard the smallest connected components and therefore avoid some noise that could contribute unwanted peaks to the $\theta\rho$ parameter space.

Connected components analysis is itself well-known and there are several known approaches to defining and recognising a connected component in an image. The book entitled "Digital Image Processing" by Rafael C. Gonzalez and Richard E. Woods published by Addison-Wesley, 1992 covers the subject of connected components analysis. The approach taken by these authors is as follows:

A pixel p at co-ordinates (x, y) has two horizontal and two vertical neighbours whose co-ordinates are given by:

$$(x+1, y), (x-1, y), (x, y+1), (x, y-1).$$

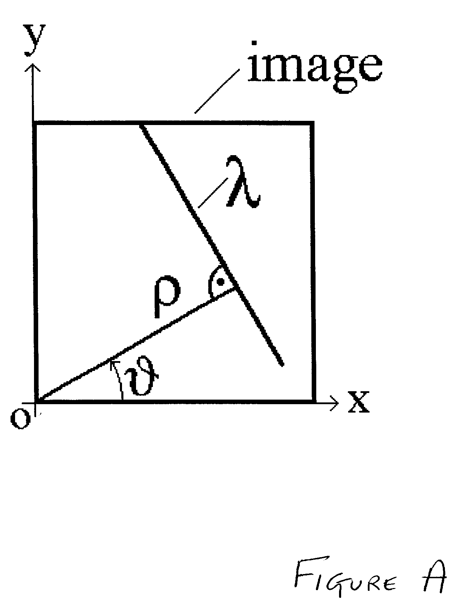

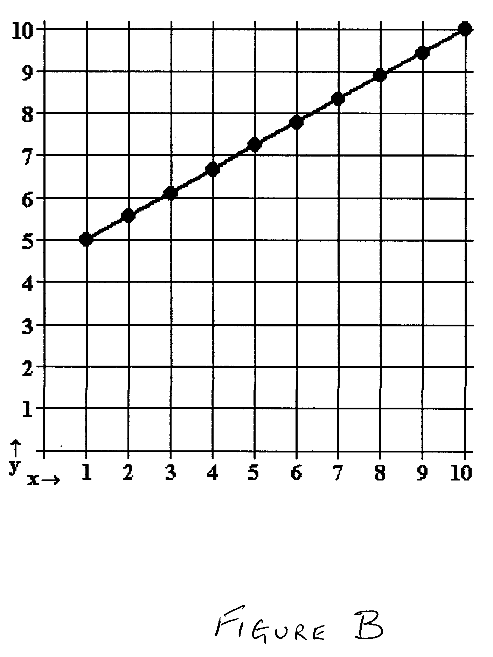

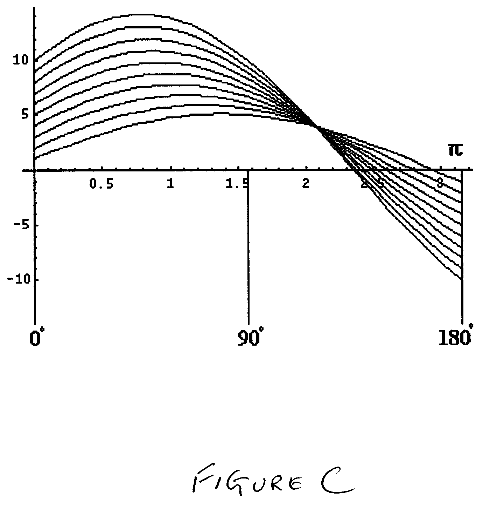

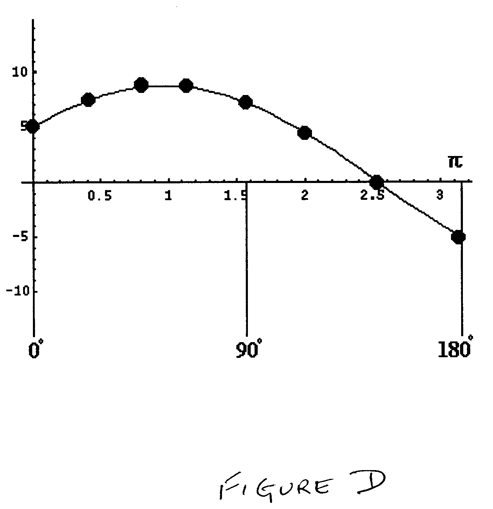

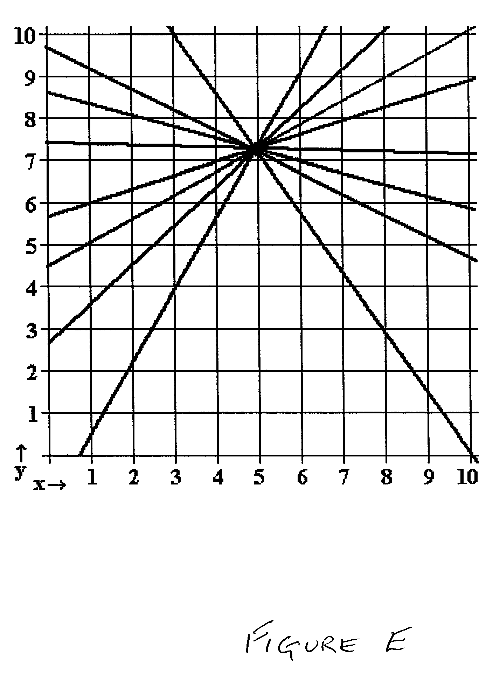

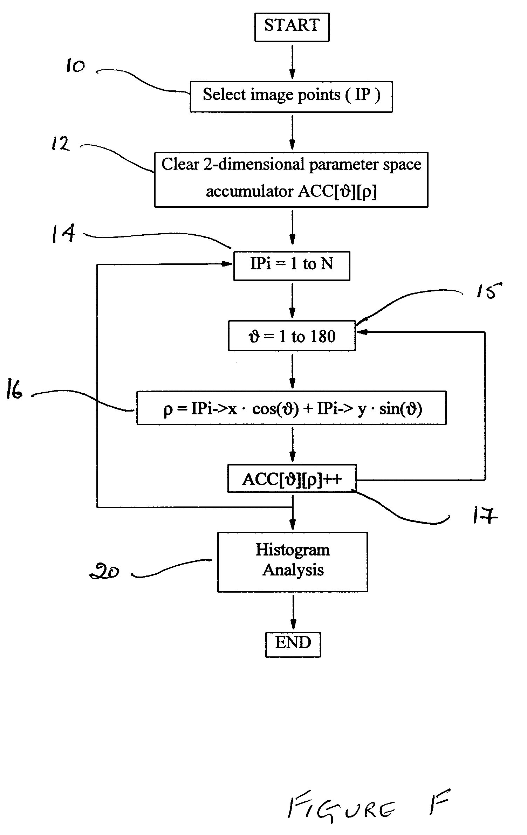

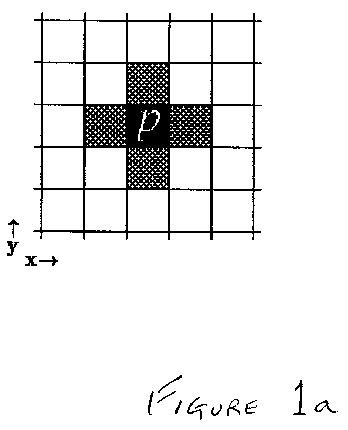

This set of pixels, called the 4-neighbours of p, is denoted by $N_4(p)$ (see Figure 1a). Each pixel is a unit distance from (x, y), and some of the neighbours of p lie outside the digital image if (x, y) is on the border of the image.

The four diagonal neighbours of p have co-ordinates:

$$(x+1, y+1), (x+1, y-1), (x-1, y+1), (x-1, y-1)$$

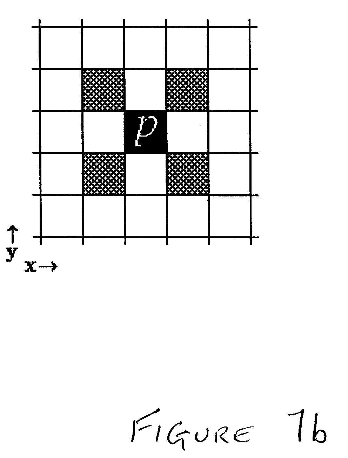

and are denoted by $N_D(p)$ (see Figure 1b). These points, together with the 4-neighbours, are called the 8-neighbours of p, denoted by $N_8(p)$ (see Figure 1c). As before, some of the points in $N_D(p)$ and $N_8(p)$ fall outside the image if (x, y) is on the border of the image.

Connectivity between pixels is an important concept used in establishing boundaries of objects and components of regions in an image. To establish whether two pixels are connected, it must be determined if they are proximate in some sense (eg. if they are 4-neighbours) and if their grey levels satisfy a specified criterion of similarity (eg. if they are equal). For instance, in a binary image with values 0 and 1, two pixels may be 4-neighbours, but they are not said to be connected unless they have the same value.

Let V be the set of grey-level values used to define connectivity; for example, in a binary image, V = {1} for the connectivity of pixels with value 1. In a grey-scale image, for the connectivity of pixels with a range of intensity values of, say, 32 to 64, V = {32, 33, ......., 63, 64}.

Two pixels can also be said to be connected if they are joined by an unbroken chain of pixels enjoying a relevant form of connectivity.

We consider three types of connectivity:

1) 4-connectivity - two pixels p and q with values from V are 4-connected if q is in the set $N_4(p)$;

2) 8-connectivity - two pixels p and q with values from V are 8-connected if q is in the set $N_8(p)$;

3) m-connectivity (mixed connectivity) - two pixels p and q with values from V are m-connected if

$$q \text{ is in } N_4(p), \text{ or}$$

$$q \text{ is in } N_D(p) \text{ and the set } N_4(p) \cap N_4(q) \text{ is empty. (This is the set of pixels that are}$$
$$\text{4-neighbours of both p and q and whose value are from V.)}$$

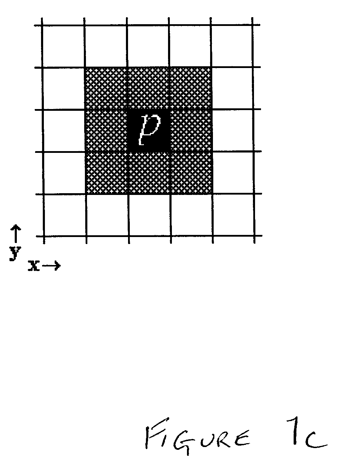

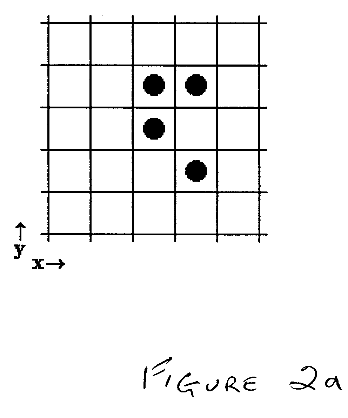

Mixed connectivity is a modification of 8-connectivity and is introduced to eliminate the multiple path connections that often arise when 8-connectivity is used. For example, consider the arrangement shown in Figure 2a. For V = {1}, the path between 8-neighbours of the centre pixel are shown as thick lines in Figure 2b. Note the ambiguity is removed by using m-connectivity, as shown in Figure 2c.

A pixel p is 'adjacent' to a pixel q if they are connected.

We can define 4-, 8-, m-adjacency depending on the type of connectivity specified. Two image subsets S1 and S2 are adjacent if some pixel in S1 is adjacent to some pixel in S2. A path from pixel p with co-ordinates $(x_0, y_0)$ to pixel q with co-ordinates $(x_n, y_n)$ is a sequence of distinct pixels with co-ordinates:

$$(x_0, y_0), (x_1, y_1), ..., (x_n, y_n)$$

where $(x_i, y_i)$ is adjacent to $(x_{i-1}, y_{i-1})$, $1 \leq i \leq n$, and n is the length of the path. 4-, 8-, and m-adjacency can be defined depending on the type of connectivity specified.

If p and q are pixels of an image subset S, then p is connected to q in S if there is a path from p to q consisting entirely of pixels in S. For any pixel p in S, the set of pixels in S that are connected to p is called a 'connected component' of S. Hence any two pixels of a connected component are connected to each other, and distinct connected components are disjoint ie none of their respective pixels are connected.

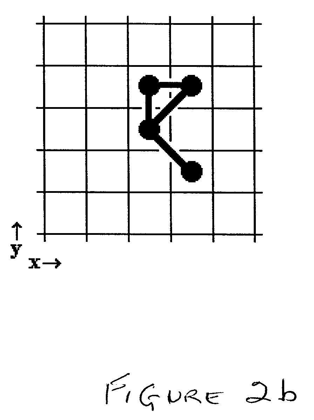

An image is scanned pixel by pixel, from left to right and from top to bottom. To reduce the amount of memory used, only the linked list of currently active components is maintained as the image is processed in scanline order. From all finished (inactive) connected components, only the centre of their bounding box is kept in another linked list. Furthermore the description of each individual black component maintains only a list of pixel runs that correspond to the intersection of the component with the most recent image row (see Figure 3). In this way, only two pixel rows are considered at a lime - the new scanline and the previous one. Figure 3 shows an example of the process of scanning and building up connected components. The new scanline S is considered for 8-neighbour connectivity with the preceding line which represents the current state of the connected components. In fact Figure 3 shows a complex example of a connected component analysis in which two existing components merge and bifurcate on the same scanline to create a single component comprising a list of two pixel runs. The pixels of runs which show the existing list of active connected components are shown filled solid black. Below them the runs of pixels in the new scanline are shown in dark grey.

Due to the 8-neighbour connectivity between the existing component pixel runs and the new runs, the current row joins the components to form a single new component.

As each subsequent row of the image is processed the list of active components is updated to reflect their continuation onto the new image row. Note that under this scheme the actual pixel coverage of the component is only implicitly defined by the lower-left and upper-right corner co-ordinates of the bounding box of the component.

This process is more efficient and more predictable in terms of memory use than maintaining a data structure that assigns a label to each individual pixel.

As each new scanline of the image is processed components are extended by identifying 8-neighbour connectivity between runs of black pixels and those pixel runs that describe the current state of the component. The following outcomes can occur:

At the component level -

New components can be created

Existing components can be merged

Existing components can terminate

At the individual run level -

Existing runs can be extended

Existing runs can merge

Existing runs can split into N new runs

Existing runs can terminate.

The top level description of the algorithm for processing each new image row is as follows:

- Find runs of black pixels on the current row;

- For each component,
  replace current list of runs with the list of runs to which they are connected (8-neighbour) on the current row;

- Merge components which share a common run;

- Remove components that did not find connections on the current row,
  if the size of the bounding box is in a certain range calculate its centre and keep only this information

- Create new components from runs on the current row that were not connected to.

For efficiency, the list of connected components is kept ordered with respect to the first intersection of each component with the current row. The list of runs within each component is also kept ordered.

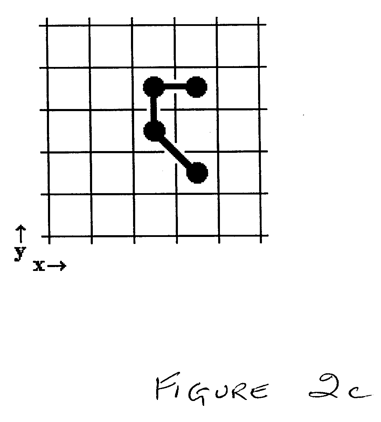

The connected component analysis is applied to the relevant image and then the centre points of the bounding boxes are taken as input for the Hough Transform (see Figure 4). Figure 4a shows a thick textured line image, Figure 4b represents the image after connected components analysis with a bounding box around each of the characters (although the image is not actually stored in this form, only the information defining the bounding box needing to be stored). Figure 4c shows the centre points of the bounding boxes and a virtual line interconnecting the centre points.

There are optional ways to improve the effectiveness of the connected components analysis for the purpose of recognising ordinary text. By examination of the attributes of the connected components, the working set ie. a linked list, of connected components can be reduced to one which contains a higher percentage of characters (ideally 100% characters). One way is to use an area threshold. This means discarding the largest of the graphics leaving only the smaller graphics and text components as members of the working set of connected components. Instead of pre-setting an area threshold and discarding everything larger than the threshold, another approach is to detect the section of the image which is most heavily populated with connected components and to calculate the average area of the connected components in this section of the image and to discard connected components which differ appreciably in size from this average value.

Isolated straight lines within the image may also be discarded on the basis of dimensional ratio.

These techniques permit some of the graphic and noise components to be discarded.

The algorithm is robust to changes in text font style and size within a document image. It also accommodates the separation of text strings of any orientation and adapts to changes in text characteristics.

The next step is to apply the Hough transform to the centre points of the connected components.

Applying the Hough Transform

In accordance with the preferred embodiment of the present invention, the Hough Transform is applied differently from the known technique described above.

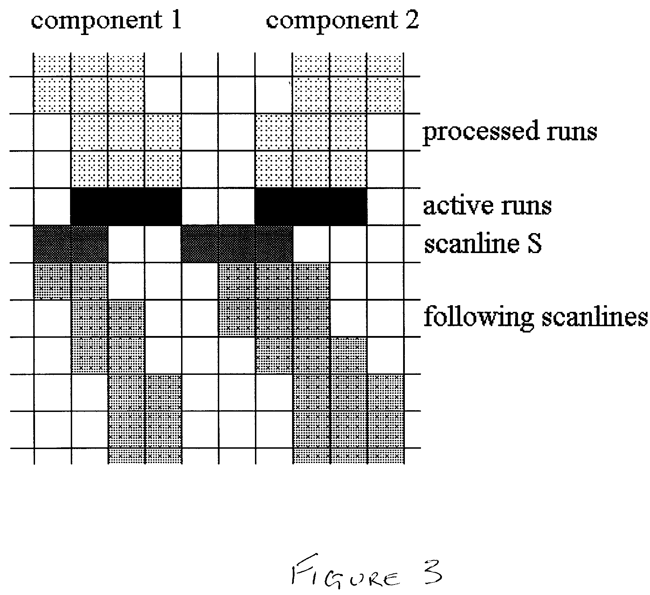

Figure 5 shows the steps in applying the Hough Transform to the problem of detecting the 5 angle of skew of a document:

step 30 is extracting the points in the document image which are to be used to represent the lines of text using connected components analysis as described above;

step 32 is to clear a one-dimensional array used for storing values representing a statistical analysis of the histogram values;

step 33 is to clear a one-dimensional parameter space accumulator prior to performing the loop for the first value of $\theta$;

steps 34-37 form a loop as follows:
for each $\theta$ value, perform a loop over each x,y co-ordinate pair of image values ie connected components centres, calculating the corresponding $\rho$ value and increment a one-dimensional parameter space accumulator ($\rho$);

step 38 is, still with the same $\theta$ value, to calculate directly the standard deviation value of that column and store it in the statistic accumulator;

step 40 is to clear the one-dimensional parameter space accumulator prior to performing the loop for the next value of $\theta$;

step 42 is again the analysis of the small array of standard deviation values to determine the document skew angle.

In practice, performance is optimised by carrying out steps 30 to 42 over a relatively wide angular range eg 80° - 100° in relatively large angular increments eg 2° to achieve a coarse estimate and then repeating the procedure over a small angular range about the estimate using much smaller angular increments eg 0.1° to achieve a more accurate result.

This new small memory Hough transform has the following advantages :

- it is faster than the known implementation;

- no two-dimensional accumulator array is required therefore it is suitable for running on computers with relatively small memories;

- since only a one-dimensional array is required, the memory requirements increase only linearly with resolution so that if the Hough transform is calculated to a very fine resolution, the extra memory required is negligible.

Peak detection

Once the Hough transform has been used to accumulate the pattern of counts in the accumulator array, the next step is to analyse the results to estimate the presence and location of local peaks that are caused by lines. Simply using a global threshold does not give sufficiently good results for the purpose of skew detection.

Satisfactory results are obtained by performing a standard deviation over each individual column of the parameter space. The standard deviation gives good results because it is a measure of how widely values are dispersed from the average value (the mean). This method reveals in which column of the array there are a large number of high pets that are much higher than the average values in the column. This indicates that there are a high number of parallel (text) lines in the document.

Equation 3 shows the calculation of the standard deviation for a given population:

$$S = \sqrt{\frac{n\Sigma x^2 - (\Sigma x)^2}{n^2}}$$

The next step is to detect which are the right peaks and to do this a moving average is calculated. From each standard deviation value $a$ the average of $w$ values around it is subtracted.

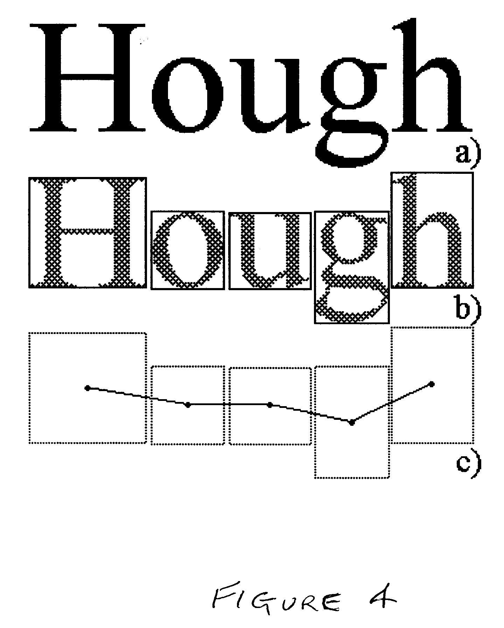

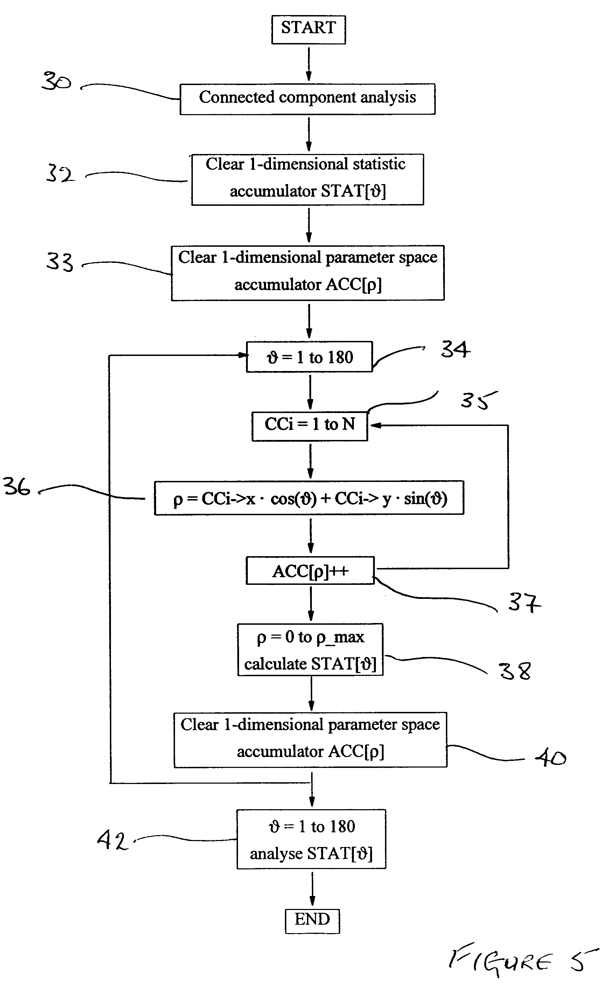

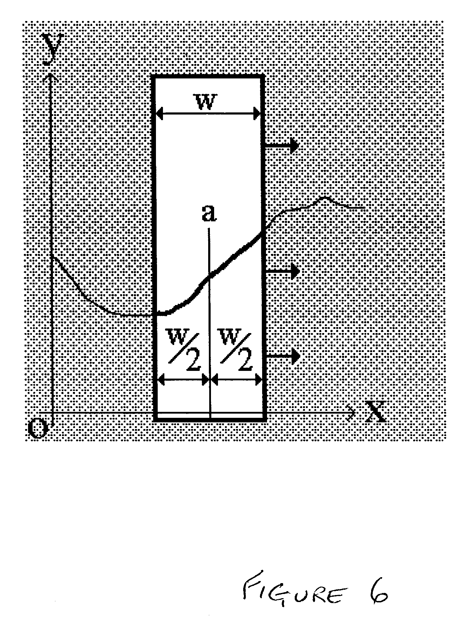

Figure 6 shows how this approach works. A sliding window of width $w$ is moved over the function values and the average of all values inside the window is subtracted from each value $a$ in the middle of the window.

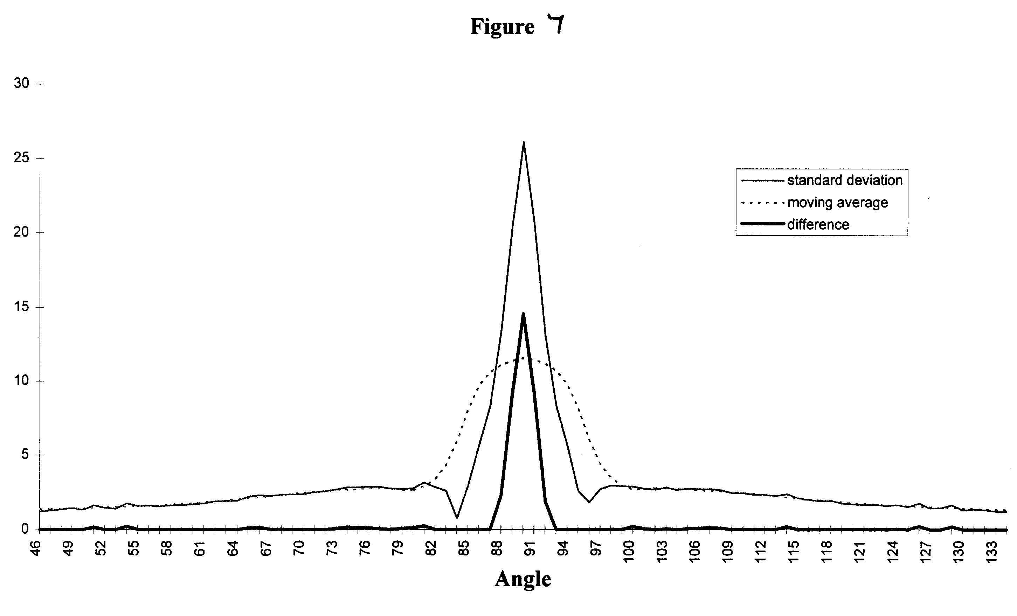

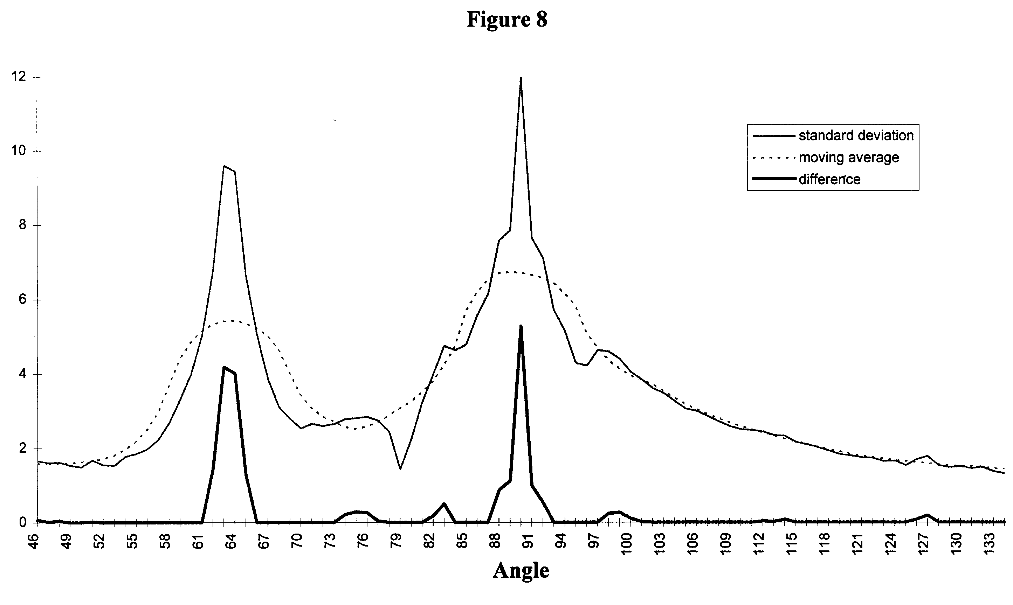

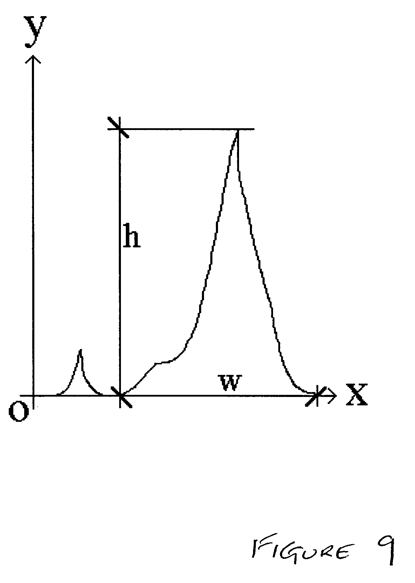

Figures 7 and 8 shows the result for two sample standard deviation curves. The advantage of this calculation is that the classification of peaks is now very easy to achieve. To avoid negative values, every value of $a$ is set to zero where the difference between the standard deviation value and the moving average is below zero. Peaks can then be classified by their height $h$ and the width w of their base as indicated in Figure 9. Other ways of classifying peaks, such as gradient of side slopes, may also be used.

Landscape Detection

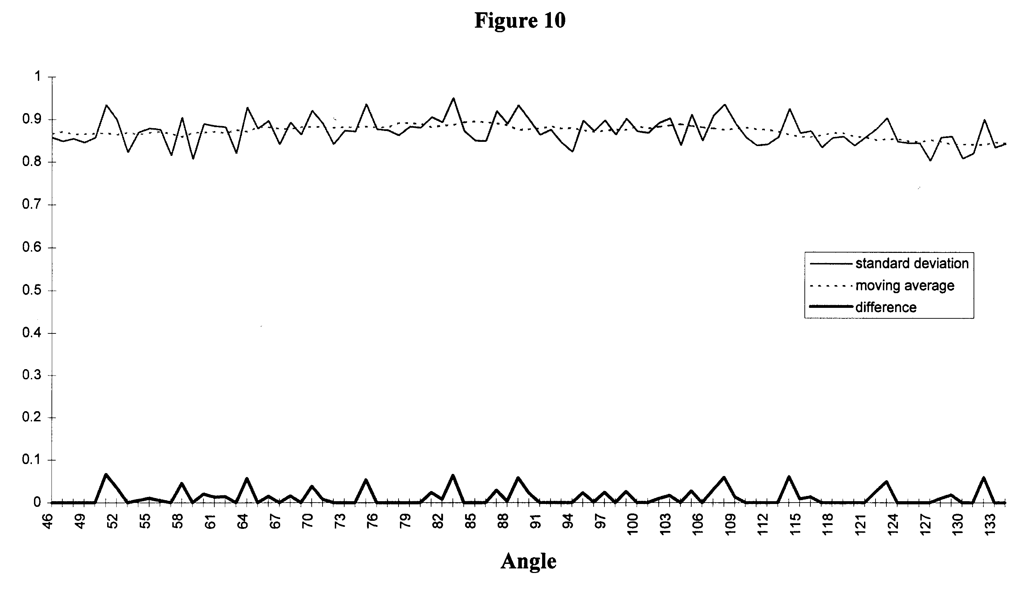

In practice, it makes sense only to apply the Hough Transform over a limited angular range because the vast majority of scanned documents will lie within that range of skew. In the present embodiment the Hough Transform is calculated over a limited angular range eg from 80° to 100°. However, if a document is in landscape orientation rather than portrait, the lines of text on the document will be vertical rather than horizontal if placed in portrait mode on a scanner and the lines will fall outside the angular range mentioned above. Figure 10 shows a typical standard deviation curve resulting from this situation. As expected, no major peaks are discernible.

Such a result as shown in Figure 10 from performing the Hough transformation on the centre points of the connected components could have two causes:

a) the input image is in landscape mode;

b) the input image does not contain sufficient parallel text lines for the analysis and therefore the skew detection has to fail.

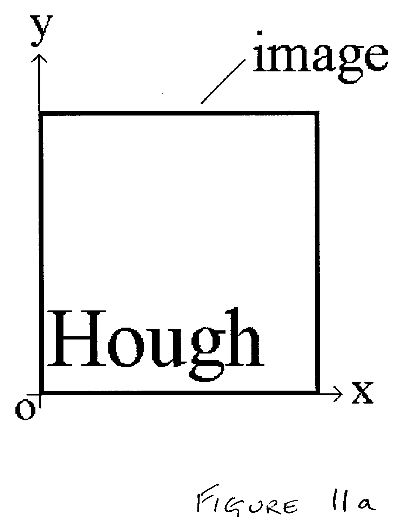

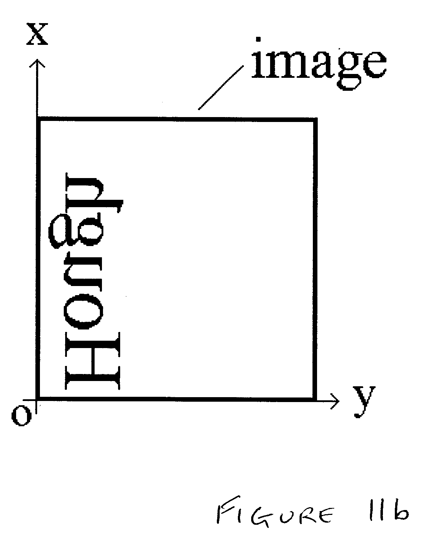

If the analysis of the transform space provides a result like Figure 10, the next step is to test whether the document is in landscape mode or not. This is possible to do without rescanning the complete document and without a major increase in processing time by performing an additional run of the Hough Transform calculation but swapping the x and y co-ordinates of the centre points of the connected components. Figure 11 shows the effect, Figure 11a showing a simple input image and Figure 11 b the resulting image after co-ordinates are swapped. This does not provide an exact solution because the result is now a mirror image but this only affects the image space and not the results obtained from the transform space and can be ignored for the purposes of skew detection.

If swapping the x and y co-ordinates of the connected component centres fails to change the results of peak analysis, then the skew angle cannot be detected. If swapping the x and y co-ordinates of the connected component centres results in clear peaks being discernible, this indicates that the input image is in landscape format. This approach is only possible because the selected image points can be accessed very easily without working on the image file again because they are stored in memory.

The algorithm in pseudo-C code for landscape detection is as follows, where CC = connected component:

```
for ( CCi = 1; CCi -> next != NULL; CCi = CCi -> next )

    {

        if ( testing_for_landscape = TRUE ) {

                x = Cci -> y;   y = Cci -> x;
            }
        else {

                x = Cci -> x;   y = Cci -> y;

            }

        for (θ = 80; θ < 100; θ = θ + 2 )

            {

                ρ = x ( cos(θ) + y ( sin(θ);

                accumulator[θ][ρ] = accumulator[θ][ρ] + 1;
            }
        }
```

As described above, a second pass over a smaller angular range and using smaller angular increments may be used to improve the accuracy of the result.

In this way the present invention also facilitates landscape detection in a simple and effective manner and is thus independent of page orientation.

## Claims

1. A method of detecting the angle of skew of a page relative to a reference orientation comprising the following steps:
scanning the page;
selecting points of the electronic image representative of the angle of skew;
mapping the selected points into parameter space using a Hough Transform which utilises an equation for a line including a parameter ($\theta$) indicative of the angle of slope of a line ('line slope parameter') and a second parameter ($\rho$) so as to build up a histogram in parameter space;
analysing the results of the mapping to determine the presence of histogram peaks which indicate the skew angle, characterised by:
for values of the line slope parameter ($\theta$):
cycling through the preselected image points and calculating the value of the second parameter ($\rho$) for the preselected image points and updating the histogram in parameter space;

statistically analysing the results of each such cycle and calculating and storing a value representative of the results of each cycle for use in the subsequent histogram peak analysis.

2. A method according to claim 1 wherein the statistical analysis involves calculating the standard deviation in the Hough Transform histogram for each value of the line slope parameter ($\theta$).

3. A method according to claim 2 comprising calculating a moving average of the standard deviation values and using the moving average to detect histogram peaks.

4. A method according to any preceding claim wherein the selected points of the electronic image representative of the angle of skew are the centres of the minimum bounding boxes of characters.

5. A method according to any preceding claim wherein the line equation used is

$$\rho = x \cos\theta + y \sin\theta.$$

6. A method according to any preceding claim further comprising swapping the co-ordinates of the selected image points and utilising the resulting co-ordinates to determine the angle of skew.

7. Apparatus for implementing a method according to any preceding claim.

FIGURE A

FIGURE B

FIGURE C

FIGURE D

FIGURE E

START

10

Select image points ( IP )

12

Clear 2-dimensional parameter space
accumulator ACC[$\vartheta$][$\rho$]

14

IPi = 1 to N

15

$\vartheta$ = 1 to 180

16

$\rho$ = IPi->x $\cdot$ cos($\vartheta$) + IPi-> y $\cdot$ sin($\vartheta$)

ACC[$\vartheta$][$\rho$]++

17

20

Histogram
Analysis

END

FIGURE F

FIGURE 1a

FIGURE 7b

FIGURE 1c

FIGURE 2a

FIGURE 2b

FIGURE 2c

component 1     component 2

processed runs

active runs
scanline S

following scanlines

FIGURE 3

FIGURE 4

START

30 — Connected component analysis

32 — Clear 1-dimensional statistic accumulator STAT[$\vartheta$]

33 — Clear 1-dimensional parameter space accumulator ACC[$\rho$]

34 — $\vartheta$ = 1 to 180

35 — CCi = 1 to N

36 — $\rho$ = CCi->x · cos($\vartheta$) + CCi-> y · sin($\vartheta$)

37 — ACC[$\rho$]++

38 — $\rho$ = 0 to $\rho$_max calculate STAT[$\vartheta$]

40 — Clear 1-dimensional parameter space accumulator ACC[$\rho$]

42 — $\vartheta$ = 1 to 180 analyse STAT[$\vartheta$]

END

FIGURE 5

FIGURE 6

## Figure 7

EP 0 702 320 A1

**Figure 8**

standard deviation
moving average
difference

Angle

EP 0 702 320 A1

FIGURE 9

# Figure 10

standard deviation
moving average
difference

**Angle**

EP 0 702 320 A1

FIGURE 11a

FIGURE 11b

EP 0 702 320 A1

European Patent
Office

**EUROPEAN SEARCH REPORT**

Application Number

EP 94 30 6760

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 485 051 (INTERNATIONAL COMPUTERS LIMITED)<br>* column 2, line 31 - line 47 *<br>--- | 1-7 | G06K9/32 |
| Y | SPSE SYMPOSIUM ON HYBRID IMAGING SYSTEMS, 1987<br>pages 21 - 24<br>HENRY S. BAIRD 'The Skew Angle of Printed Documents'<br>* the whole document *<br>----- | 1-7 | |
| | | | **TECHNICAL FIELDS SEARCHED (Int.Cl.6)**<br><br>G06K |

The present search report has been drawn up for all claims

| Place of search | Date of completion of the search | Examiner |
|---|---|---|
| THE HAGUE | 20 January 1995 | Sonius, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

33